# EUROPEAN PATENT APPLICATION

(11) **EP 1 752 949 A1**
(43) Date of publication of application: **14.02.2007**
(21) Application number: 05730152.5
(22) Date of filing: 18.04.2005
(51) Int. Cl.: G09B 29/00, G01C 21/00, G06T 11/60, G09B 29/10

(54) **DISPLAY CONTROL DEVICE, DISPLAY METHOD, PROGRAM FOR DISPLAY CONTROL, INFORMATION RECORDING MEDIUM, AND RECORDING MEDIUM**

(30) Priority: 10.05.2004 JP 2004140244
(71) Applicant: Pioneer Corporation, Tokyo 153-8654 (JP); Increment P Corporation, Tokyo 153-8665 (JP)
(72) Inventor: TAKAHASHI, Toshiaki, Tokyo 153-8665 (JP)
(74) Representative: Tappe, Hartmut
(86) International application number: PCT/JP2005/007384
(87) International publication number: WO 2005/109377

(57) **Abstract**

There is provided a display control device or the like, which can diminish process for displaying various objects on a map, formed from a plurality of unit maps, and can promptly display such the various objects. In a navigation apparatus that includes an HD having object data 41, recorded on it, for displaying an object corresponding to a map formed from a plurality of unit maps with use of the object data 41, the object data 41 include object ID data 70 and 81 for identifying the object corresponding to the object data 41, and position data 72 that indicate a display position of the display object, displayed with use of the object data 41 and indicate their display position in an absolute manner and independently of the unit maps. In addition, the display control device includes an HD drive for reading out the object 41 containing the position data 72 and a display control unit for displaying the object corresponding to the object data 41 in use of the object data 41.

## Description

### FIELD OF THE INVENTION

The present invention relates to a display control device, a display method, a display controlling program, an information recording medium, and a recording medium, and more particularly, to a display control device that causes a display means to display an object such as an architecture on a map, a display method for displaying such an object, a display controlling program to be utilized in the display control device, a recording medium having display information recorded thereon for an operation of displaying the object, and an information recording medium having the display controlling program recorded thereon.

### BACKGROUND OF THE INVENTION

In recent years, car navigation systems widely spread, and in this trend, there are outstanding improvements in the functions of navigation systems. As an example of such an improvement, a notable scenery or architecture existing in the vicinity of the present location or a target location is displayed in the form of a two-dimensional or three-dimensional image, together with present locations of vehicle, routes to be followed, and other routes. Such a display is being widely utilized.

Meanwhile, in response to demand on wider area displays and more detailed displays, various efforts are made in the operation of displaying a map. One of such efforts involves dividing a map to be displayed into square unit maps, each having a predetermined area for each scale, and storing unit map data to be used for displaying each of the unit maps on a recording medium such as a hard disk, with identification information for distinguishing the subject unit map from the other unit maps and road data contained in the subject unit map being associated with the unit map data. By this technique of displaying a map with use of unit maps, there an effect such that burden of scale changes and map scrolling is reduced.

(A) Here, in a case where display objects other than roads, such as notable architectures, are displayed on a map so as to facilitate road guidance and target setup, position data indicating the position of each display object on the map are stored as relative position data indicating a relative position of the display object with respect to a reference position in the unit map to which the display object belong (the reference position being located at the lowermost left end in the unit map, for example) by the above described conventional technique.

(B) In a case where the display object is so large (or so wide) as to be displayed across two or more unit maps, the identification information indicative of the display object and display data for visually displaying (or drawing) the display object are ordinarily associated only with the unit map data corresponding to one of the unit maps to which the display object belongs.

### DISCLOSURE OF THE INVENTION

### Problems to be Solved by the Invention

However, according to the above described display technique, in the conventional technique explained in the above (A), the position data indicating the position of the display object on the map are the relative position data with respect to the unit map to which the display object belongs. Therefore, in order to display the display object, it is necessary to read at least a part of the unit map data corresponding to the unit map (the data indicating the reference position). Even in a case where only the display object is expected to be displayed, it is necessary to read out a part of the unit map data corresponding to the subject unit map. As a result, there is a problem that the operation of displaying the map and each display object becomes complicated.

In the case of the conventional technique explained in the above (B), the display data of the display object are associated only with the unit map data, corresponding to one of the unit maps at the least displaying the display object. Therefore, there is a problem that the display object is not displayed unless the unit map data thus associated are read out. This problem leads to another problem that, when the vehicle enters a region represented by a unit map, not associated with the display data corresponding to the display object and selected out of the unit maps at the least the display object, the display object is not actually displayed unless the vehicle reaches the region represented by the unit map, associated with the display data.

The present invention is provided in consideration of the above problems. An object of the present invention is to provide a display control device that can simplify the operation for displaying various objects in accordance with a map formed by a plurality of unit maps and can display such various objects in opportune time, a display method for displaying the objects, a display controlling program used in the display control device, a recording medium having display information provided for the operation of displaying the objects on it, and an information recording medium having the display controlling program recorded on it.

### Means to Solve the Problems

To solve the above problems, the invention recited in claim 1 provides a display control device that has a recording medium such as an HD (hard disk) for recording display object information to be used for displaying an object in a map formed from a plurality of unit maps, the display control device displaying the object on a display means with use of the display object information, the display object information including: display object identification information for identifying the display object in accordance with the display object information; and absolute position information that indicates the display position of the display object with use of the display object information, the absolute position information indicating the display position in an absolute manner, independently of each of the unit maps, the display control device comprising: a reading means that reads the display object information including the absolute position information from the recording medium such as an HD drive; and a control means that uses the read display object information and displays the display object on the display means in accordance with the read display object information.

To solve the above problems, the invention recited in claim 7 provides a display method for displaying a display object on a display means with use of display object information recorded on a recording medium such as an HD, the display object information being used for displaying the display object in a map formed from a plurality of unit maps, the display object information including: display object identification information for identifying the display object in accordance with the display object information; and absolute position information that indicates the display position of the display object with use of the display object information, the absolute position information indicating the display position in absolute terms, independently of each of the unit maps, the display method comprising: a reading step of reading the display object information including the absolute position information from the recording medium; and a display controlling step of using the display object information thus read and displaying the display object on the display means in accordance with the read display object information.

To solve the above problems, the invention recited in claim 8 provides a display controlling program that is executed by a computer provided in a display control device that has a recording medium such as an HD for recording display object information to be used for displaying a display object in a map formed from a plurality of unit maps, the display control device displaying the display object on a display means with use of the display object information, the display object information including: display object identification information for identifying the display object in accordance with the display object information; and absolute position information that indicates the display position of the display object with use of the display object information, the absolute position information indicating the display position in an absolute manners, independently of each of the unit maps, the display controlling program causing the computer to function as: a reading means that reads the display object information including the absolute position information from the recording medium; and a control means that uses the read display object information and displays the display object on the display means in accordance with the read display object information.

To solve the above problems, the invention recited in claim 9 provides an information recording medium having the display controlling program according to claim 8, with the display controlling program being recorded on the information recording medium so as to be readable by the computer.

To solve the above problems, the invention recited in claim 10 provides a recording medium that is the recording medium provided in the display control device according to any one of claims 1 through 6, with the recording medium comprising a display object information recording region that has the display object information recorded therein such that the display object information is read out by the reading means.

### BRIEF DESCRIPTION OF THE DRAWINGS

Fig. 1 is a block diagram showing a schematic structure of a navigation apparatus in accordance with an embodiment of the present invention;
Fig. 2 shows the data structure of map data in the navigation apparatus in accordance with the embodiment;
Fig. 3 shows a display example of an object to be displayed in accordance with the embodiment; and
Fig. 4 is a flowchart of an operation of displaying an object in accordance with the embodiment.

### DESCRIPTION OF REFERENCE NUMERALS

- 1: unit map data
- 22: extension data
- 41, 53: object data
- 70, 81: object ID data
- 71: drawing data
- 72: position data
- 90: latitude data
- 91: longitude data
- 100: navigation apparatus
- 105: HD drive
- 105A: HD
- 110: display unit
- 112: display control unit
- 115: system control unit
- A1, A2, A3, A4, A5, A6, A7, A8, A9: unit map
- OJ: object
- P2, P3, P5, P6, P7, P8, P9: display position

### PREFERRED EMBODIMENTS FOR CARRYING OUT THE INVENTION

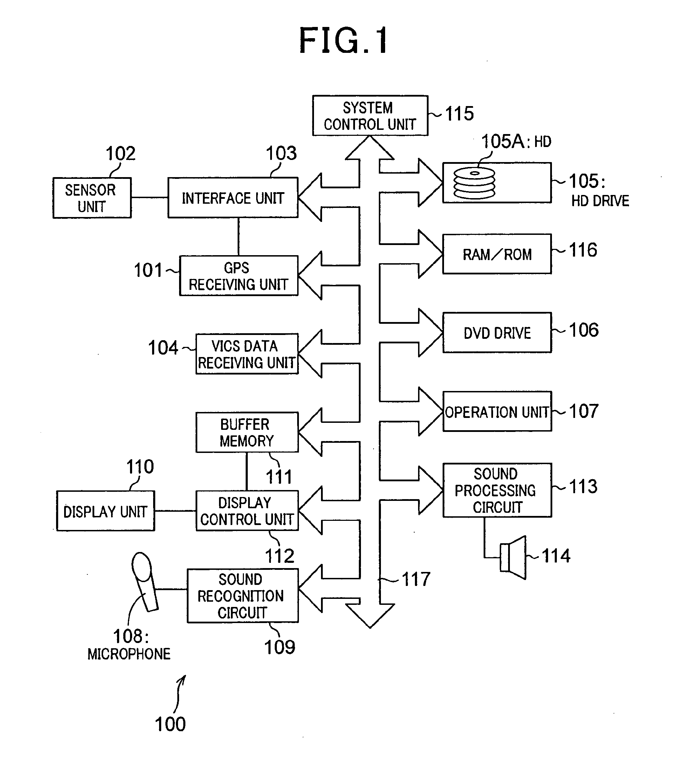

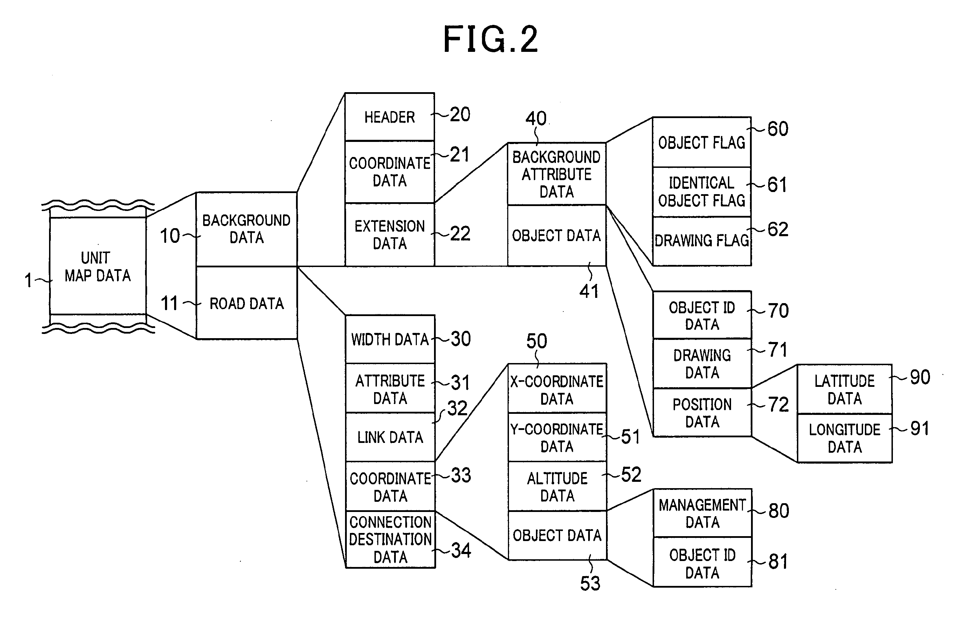

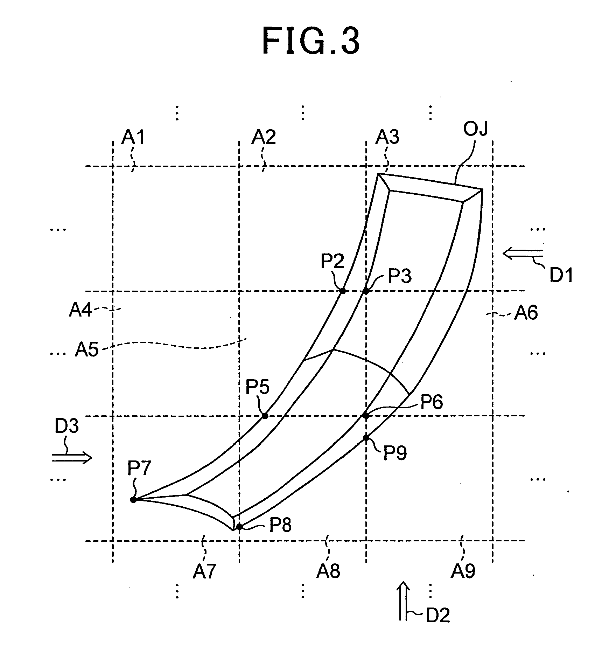

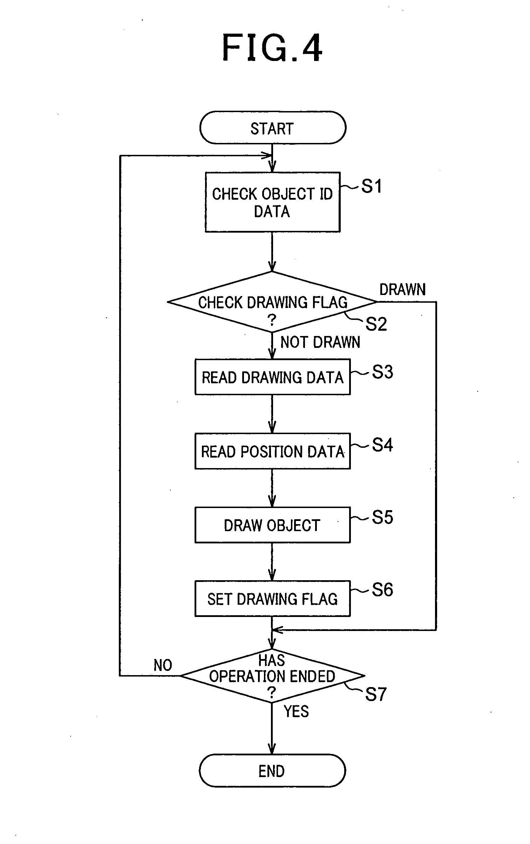

A preferred embodiment of the present invention will be described in reference to Figs. 1 through 4. In the following embodiment, the present invention is applied to image display control in a car navigation apparatus. Fig. 1 is a block diagram showing a schematic structure of the navigation apparatus in accordance with this embodiment. Fig. 2 shows the data structure of map data in the navigation apparatus. Fig. 3 shows an example of a displayed object. Fig. 4 is a flowchart showing process of displaying an object to be displayed.

As shown in Fig. 1, the navigation apparatus 100 in accordance with this embodiment includes a GPS (Global Positioning System) receiving unit 101, a sensor unit 102, an interface unit 103, a VICS (Vehicle Information Communication System) data receiving unit 104, an HD drive 105 serving as a reading means that contains an HD 105A as a recording medium, a DVD (Digital Versatile Disc) drive 106, an operation unit 107, a microphone 108, a sound recognition unit 109, a display unit 110 as a display means, a buffer memory 111, a display control unit 112 as a control means, a sound processing unit 113, a speaker 114, a system control unit 115, a ROM (Read Only Memory)/RAM (Random Access Memory) unit 116, and a data bus 117 that mutually connects those components.

Now, the operations of the entire navigation apparatus 100 are described.
First, the GPS receiving unit 101 receives GPS electric waves generated from a geodetic earth orbiting satellite. On the basis of the received GPS electric waves, the GPS receiving unit 101 calculates the latitude and longitude of the present position of the vehicle, and outputs the latitude and longitude as GPS data to the interface unit 103. The sensor unit 102 includes various sensors for detecting traveling speed, accelerated velocity, and azimuthal angle of the vehicle. The sensor unit 102 outputs traveling data corresponding to the results of detection to the interface unit 103.

On the basis of the traveling data input from the sensor unit 102 and the GPS data input from the GPS receiving unit 101, the interface unit 103 calculates the present position of the vehicle, and outputs own vehicle position data corresponding to the result of calculation to the system control unit 115. The VICS data receiving unit 104 receives airwaves of FM multiple broadcasting or the like. The VICS data receiving unit 104 extracts VICS data from the airwaves, and outputs the VICS data to the system control unit 115. Here, VICS stands for Vehicle Information and Communication System, and VICS data represent vehicle information indicating traffic jams, traffic accidents, traffic controls, and the like.

The HD drive 105 is found to include the rewritable HD 105A. In addition to map data for displaying maps having data structure to be described below, search data for searching for spots, guide data that are necessary for guiding the user through each route and the like, are readably recorded on the HD 105A. On the basis of each control signal that is input from the system control unit 115, the HD drive 105 reads various data from the HD 105A, and supplies the data to the system control unit 115. In this embodiment, each map to be displayed is shown by arranging unit maps each having a predetermined length and width. Accordingly, the map data for display processing is also recorded on the HD 105A, with the map data being divided into unit map data for displaying the unit maps.

Meanwhile, the DVD drive 106 includes a housing unit that detachably houses a DVD, and a drive that reproduces a disk housed in the housing unit. The DVD drive 106 reads various data from the DVD accommodated in the housing unit, and outputs the data to the data bus 117.

The operation unit 107 is formed from a remote control device or the like that has various keys including the keys on a numeric keypad and cursor keys. The operation unit 107 outputs a control signal in correspondence with input operation performed by a user (hereinafter, a driver or a fellow passenger) to the system control unit 115.

The sound recognition circuit 109 receives sound that is vocalized by a user and input to the microphone 108. The sound recognition unit 109 analyzes the vocalized sound, so as to recognize an operation command issued from the user. The sound recognition unit 109 then outputs a control signal in correspondence with the operation command to the system control unit 115.

Meanwhile, the display control unit 112 receives map data that are read from the HD drive 105. Under the control of the system control unit 115, the display control unit 112 generates image data corresponding to the map thus inputted on the buffer memory 111 on the basis of the map data. The generated image data are read from the buffer memory 111 in predetermined timing, and output to the display unit 110. The display unit 110 may be formed with any type of display device, such as CRT (Cathode Ray Tube), organic EL (Electro Luminescent) panel, or liquid crystal display panel.

Further, under the control of the system control unit 115, the sound processing unit 113 generates an audio signal, and amplifies the audio signal thus generated through the speaker 114. By virtue of the function in the sound processing unit 113, the navigation apparatus 100 according to this embodiment notifies the user of the traveling direction of the vehicle at the next intersection, or notifies the user of the level of the traffic jam and traffic closure on the preset route, for example.

In this structure, the system control unit 115 is formed mainly from a CPU (Central Processing Unit), and includes various input/output ports such as a GPS receiving port, a key input port, and a display unit control port. With this arrangement, the system control unit 115 totally controls the functions of the navigation apparatus 100. In such a control, the system control unit 115 reads a controlling program from the ROM/RAM unit 116, and carries out processes. It makes the ROM/RAM unit 116 temporarily holds data under processing.

Next, in reference of Fig. 2, the data structure of the map data provided for drawing map, and stored in the HD drive 105 in accordance with this embodiment is specifically described.

As described above, the map data in accordance with this embodiment are divided into unit map data respectively corresponding to one unit map.

As shown in Fig. 2, single unit map data 1 include background data 10 and road data 11. The background data 10 are provided for displaying background (display objects (hereinafter referred to as "object") formed from two-dimensional or three-dimensional images showing architectures such as well-known buildings and stadiums or places of scenery, and lands or sea level surfaces as their backgrounds) other than roads in the unit map. The road data 11 are used for displaying the roads together with their backgrounds in the unit map. In the map data according to this embodiment, identification information is attached to each of the objects, so that the object can be distinguished from the other objects.

The background data 10 include a header 20, coordinate data 21, and extension data 22. The header 20 includes size data that indicates the amount of information in the subject unit map data 1, a flag that indicates whether the extension data exist in the unit map data 1 and the like. The coordinate data 21 indicate position of element points, constituting the background of the unit map (such as points where the land in the background changes its colors and positions where an object to be displayed is displayed) by using relative coordinates with respect to a reference point in a unit figure (normally the lowermost left end point in a unit map). The extension data 22 indicate a process of displaying an object in accordance with this embodiment.

Furthermore, the extension data 22 include background attribute data 40 that indicate the attribute of a corresponding background, and object data 41 that indicate the object contained in the corresponding background.

Furthermore, the background attribute data 40 include an object flag 60 that indicate whether an object to be displayed exists in the unit map, an identical object flag 61 that indicates whether the object to be displayed in the unit figure is an object that lies across a plurality of unit figures, and a drawing flag 62 as executed information that indicates whether the object has already been drawn for display.

At this time, the object flag 60 is set to be "1b" (hereinafter, "b" represents binary code expression) when there is an object to be displayed in the unit map. When the object to be displayed does not exist in the unit map, the object flag 60 is set to be "0b". The identical object flag 61 is set to be "1b" when the object to be displayed in the unit figure lies across a plurality of other unit figures. When the object to be displayed does not lie across other unit figures, the identical object flag 61 is set to be "0b". The drawing flag 62 is set to be "1b" when the object is an object already drawn. When the object has not been drawn yet, the drawing flag 62 is set to be "0b".

Meanwhile, the object data 41 include object ID (Identification) data 70 that are the identification information for identifying the object, drawing data 71 that are a group of data for drawing and displaying the object on the map, and position data 72 that indicate the position of the object to be displayed on the map (the absolute display position that is not affected by the unit maps).

The position data 72 include latitude data 90 that indicate the latitude of the display position of the object in the unit map, and longitude data 91 that indicate the longitude of the display position.

The drawing data 71 are designed so that the entire object (regardless of whether the object is to be displayed across two or more unit maps) can be drawn and displayed, with the reference point being the absolute display position indicated by the position data 72.

Meanwhile, the road data 11 include width data 30, attribute data 31, link data 32, coordinate data 33 of each element point, and connection destination data 34. The width data 30 indicate the width of the road represented by the road data 11. The attribute data 31 indicate the attributes of the road (the road attributes such as an inbound or outbound undivided main road, an inbound or outbound divided main road, a connected road, a link at an intersection, a general sidewalk, a sidewalk in a service area, or the like). The link data 32 are identification information for identifying the road in the link data. The coordinate data 33 of each element point indicate the relative position of each of the element points constituting the road in the unit map (the element points including bent points, intersections, split-off points, and junctions of the road). The connection destination data 34 indicate roads in other unit maps to which the road is connected.

The coordinate data 33 corresponding to each element point include X-coordinate data 50 and Y-coordinate data 51 that are entities of the coordinate data 33, altitude data 52 indicating an altitude of road, and object data 53 that indicate the object to be displayed on a road or beside a road.

In the last, the object data 53 include management data 80 that indicate the attributes of corresponding object or the like, and object ID data 81 that are the identification information for identifying the object. The object to be identified by the object ID data 81 is the same object as the object to be identified by the object ID data 70. The drawing data 71 and the position data 72 are used as the data for drawing the object to be identified by the object ID data 81.

Referring now to Fig. 3, a specific example of the object data 41 or the like corresponding to a specific example of the object to be displayed using the map data having the data structure shown in Fig. 2 is described. In Fig. 3, roads or the like other than the objects are not shown.

In the example shown in Fig. 3, a case where an object OJ is to be displayed across unit maps A2, A3, A5, A6, A7, A8, and A9 on a map that is formed from the unit maps A1 through A9, adjacent to one another.

As described above, in the map data in accordance with this embodiment, each unit map contains the object ID data 70 and 81 for identifying the object to be displayed in the unit maps. In any of the cases where a vehicle enters the region represented by unit map A3 from the right (from the east side) as indicated by arrow D 1 in Fig. 3, where a vehicle enters the region shown by unit map A9 from the bottom (from the south side) as indicated by arrow D2, and where a vehicle enters the region represented by unit map A7 from the left (from the west side) as indicated by arrow D3, the unit map data 1 corresponding to the unit map A3, A9, or A7 are read out of the HD 105A, so as to recognize the fact that a part of the object OJ is contained in the unit maps A3, A9, or A7.

The position data 72 contained in the unit map data 1 indicates of the position of the part of the object OJ that is the closest to the reference point of the unit map (normally the lowermost left end in the unit map, as described above) or is located at the reference point (in the case of the unit map A3 or A6 in Fig. 3) using the latitude (the latitude data 90) and the longitude (the longitude data 91), which are irrelevant to the unit maps. Here, the object OJ is contained in the unit map corresponding to the position data 72, and the latitude and the longitude are not affected by any of the unit maps. In the example case shown in Fig. 3, the position data 72 indicating the latitudes and the longitudes of display positions P2, P3, P5, P6, P7, P8, and P9 in the unit maps A2, A3, A5, A6, A7, A8, and A9 are contained in the unit map data 1 corresponding to each of the unit maps A2, A3, A5, A6, A7, A8, and A9.

When a vehicle moves toward the unit map A3 in the direction indicated by the arrow D1, for example, the unit map data 1 corresponding to the unit map A3 are read out, so that the position data 72 indicating the display position P3 are detected by reading the object data 41 and detecting the object ID data 70. At the same time, the corresponding drawing data 71 are detected, and the entire object OJ is drawn and displayed with use of the drawing data 71, from the reference point of the display position P3.

In a manner similar thereto, when a vehicle moves toward the unit map A7 in the direction indicated by the arrow D3, for example, the unit map data 1 corresponding to the unit map A7 are read out, so that the position data 72 indicating the display position P7 are detected. In the meantime, drawing data 71 corresponding thereto are detected, and the entire object OJ is drawn and displayed with use of the drawing data 71 from the reference point of the display position P7 being the reference point.

Further, in the similar manner thereto, when a vehicle moves toward the unit map A9 in the direction indicated by the arrow D2, for example, the unit map data 1 corresponding to the unit map A9 are read out, so that the position data 72 indicating the display position P9 are detected. In the meantime, drawing data 71 are detected, and the entire object OJ is drawn and displayed with use of the drawing data 71 from the reference point of the display position P9.

Then, referring to Fig. 4, the object displaying operation to be performed mainly by the display control unit 112 according to this embodiment is described..

As shown in Fig. 4, in the object drawing and displaying operation in accordance with this embodiment, when a vehicle enters or approaches a region corresponding to a unit map, unit map data 1 corresponding to the region are read out, and it is checked whether or not the object ID data 70 and 81 exist in the unit map data 1 in step S1. Then, the contents of the data 70 and 81 are checked (step S1). The contents of the drawing flag 62 are also checked (step S2).

If the drawing flag 62 indicates that the object has already been drawn and displayed, or in a case where the object has already been drawn and displayed because the object is to be displayed across two or more unit maps and a part of the object exists in other unit maps through which the vehicle has passed by then ("drawn" in step S2), the process directly goes to step S7. If the drawing flag 62 indicates that the object has not been drawn yet ("not drawn" in step S2), the corresponding drawing data 71 for drawing and displaying the object are read out (step S3), and the latitude and longitude indicated by the corresponding position data 72 are checked (step S4). Using the drawing data 72, the object is drawn and displayed on the corresponding map (step S5). The drawing flag 62 corresponding to the object is then set to "1b" (step S6).

Then it is checked to determine whether the processes of steps S 1 through S6 have been completed with respect to all the objects which should be drawn in the unit maps including a position where the vehicle currently exists (step S7). When it is necessary to continuously draw objects to be drawn ("NO" in step S7), the processes of steps S1 through S6 are repeated with respect to the objects to be drawn. In a case where the drawing and displaying procedures are completed with respect to all the necessary objects ("YES" in step S7), the object drawing and displaying operation in accordance with this embodiment immediately ends.

As described above, as to the object displaying process in the navigation apparatus 100 and the data structure therefor in accordance with this embodiment, the display position of the object can be determined, independently and regardless of the unit maps, since the position data 72 are contained in the object data 41. Accordingly, the process of displaying the object can be simplified. Also, even if the building or the architecture , for example, corresponding to the object moves, the object can be displayed in an accurate position simply by updating only the object data 41 corresponding to the object, regardless of the unit maps.

Since the position data 72 being as the reference point for the process of displaying each object is provided with respect to unit maps, an object can be promptly and precisely displayed even if the object is displayed astride on two or more unit maps.

Further, since the object displaying operation is controlled on the basis of the drawing flag 62, complication and delay due to repeated unnecessary displaying processes can be prevented.

Furthermore, since each object is displayed together with a map formed from unit maps, an easy-to-read map can be promptly and easily displayed.

Since the position data 72 include the latitude data 90 and the longitude data 91, an necessary object can be promptly displayed in a precise position, on the basis of the position data 72 that are stable with respect to the relations with the map.

Since at least either a map or an object is displayed through a navigating process, each necessary object to be displayed can be promptly and certainly displayed with precision in accordance with the traveling direction and the present position of the vehicle.

It is also possible to record the program represented by the flowchart shown in Fig. 4 on an information recording medium such as a flexible disk or a hard disk, or to obtain and record the program via the Internet or the like. The program is read out and executed by a general-purpose computer, so as to utilize the computer as the display control unit 112 according to this embodiment.

## Claims

1. A display control device that has a recording medium for recording display object information to be used for displaying a display object, corresponding to the display object information in a map, formed from a plurality of unit maps, the display control device displaying the display object on a display means with use of the display object information,
the display object information including:
display object identification information for identifying the display object corresponding to the display object information; and
absolute position information that indicates a display position of the display object with use of the display object information, the absolute position information indicating the display position in an absolute manner and independently of each of the unit maps,
the display control device comprising:
a reading means that reads the display object information including the absolute position information out of the recording medium; and
a control means that uses the display object information thus read out and displays the display object corresponding to the display information thus read out on the display means in use of the display object information thus read out.

2. The display control device according to claim 1, wherein:
the display object is an object to be displayed astride on a plurality of the unit maps;
the display object information is provided with respect to each of the unit maps, the display object information including the absolute position information which is indicative of a position that exists in the unit map, containing a part of the display object and serves as a reference point at a time of carrying out a display process for displaying the display object; and
the control means carries out the display process on the basis of the absolute position information indicative of a position of the reference point.

3. The display control device according to claim 1 or 2, wherein:
the display object information further includes execution information that indicates whether or not the display process for displaying the display object is completed with use of the display object information; and
the control means further comprises: a prohibiting means that prohibits the display process from being carried out again, when the execution information contained in the read display object information thus read out indicates that the display process is completed.

4. The display control device according to any one of claims 1 through 3, wherein
the control means displays the display object on the display means along with the map corresponding to the display object.

5. The display control device according to any one of claims 1 through 4, wherein
the absolute position information includes both latitude information and longitude information, the latitude and longitude information indicating a display position of the display object with use of the display object information including the absolute position information.

6. The display control device according to any one of claims 2 through 5, wherein
at least one of the map and the display object is displayed on the display means in a navigating process for guiding a movable body.

7. A display method for displaying a display object on a display means with use of display object information recorded on a recording medium, the display object information being used for displaying the display object in a map, formed from a plurality of unit maps,
the display object information including:
display object identification information for identifying the display object corresponding to the display object information; and
absolute position information that indicates a display position of the display object with use of the display object information, the absolute position information indicating the display position in an absolute manner and independently of each of the unit maps,
the display method comprising:
a reading step of reading the display object information including the absolute position information out of the recording medium; and
a display controlling step of displaying the display object corresponding to the display object information thus read out on the display means using the display object information thus read out.

8. A display controlling program that is executed by a computer provided in a display control device that has a recording medium for recording display object information to be used for displaying a display object in a map,
the display object information displaying the display object corresponding to the map formed from a plurality of unit maps and containing display object identification information for identifying the display object corresponding to the display object information, and absolute position information that indicates a display position of the display object displayed with use of the display object information independently of the unit maps and in an absolute manner, wherein
the display controlling program causes the computer to function as:
a reading means that reads the display object information including the absolute position information out of the recording medium; and
a control means that displays the display object on the display means corresponding to the display object information thus read out in use of the read display object information.

9. An information recording medium having the display controlling program according to claim 8 on it, the display controlling program being recorded on the information recording medium so as to be readable by the computer.

10. A recording medium that is included in the display control device according to any one of claims 1 through 6, wherein
the recording medium has a display object information recording region where the display object information is recorded therein so that the display object information is read out with the reading means.
